# EUROPEAN PATENT APPLICATION

(11) **EP 4 403 025 A1**
(43) Date of publication of application: **24.07.2024**
(21) Application number: 21964149.5
(22) Date of filing: 08.12.2021
(51) Int. Cl.: A01K 1/01

(54) **SYSTEM TOILET FOR PET**

(30) Priority: 12.11.2021 JP 2021184793
(71) Applicant: Unicharm Corporation, Ehime 799-0111 (JP)
(72) Inventor: NAKATANI Misato, Kanonji-shi, Kagawa 769-1602 (JP); SASANO Yasuhiro, Kanonji-shi, Kagawa 769-1602 (JP); KANEKO Shinya, Kanonji-shi, Kagawa 769-1602 (JP)
(74) Representative: Dolleymores
(86) International application number: PCT/JP2021/045130
(87) International publication number: WO 2023/084796

(57) **Abstract**

A system toilet for a pet includes: an excretion container having a liquid-permeable bottom surface portion; a tray placed below the excretion container and configured to store an absorbent sheet for absorbing liquid that has passed through the bottom surface portion; a lower container configured to hold the tray; and an upper container placed above the excretion container, an opening portion for a pet to enter and exit being formed in the upper container, the upper side of the upper container being opened; in the system toilet for a pet, the upper container has: a pair of sidewall portions provided to face each other on both sides in the width direction of the opening portion and extending in the front-rear direction that is the depth direction of the upper container; and a rear wall portion facing the opening portion in the front-rear direction, and the height of a sidewall highest portion having the highest height in the sidewall portion is higher than the height of a rear-wall highest portion having the highest height in the rear wall portion.

## Description

### Technical Field

An aspect of the present invention relates to a system toilet for a pet.

### Background Art

As a system toilet for a pet, there is known a configuration including: an excretion container configured to store toilet litter for covering or solidifying feces; a tray placed below the excretion container and configured to store an absorbent sheet for absorbing urine that has passed through the toilet litter; a lower container configured to hold the tray; and an upper container placed above the excretion container (see, for example, Patent Literature 1).

### Citation List

### Patent Literature

Patent Literature 1: Japanese Unexamined Patent Publication No. 2021-78412

### Summary of Invention

### Technical Problem

In a system toilet like that described above, due to scratching of toilet litter by a pet, toilet litter may be scattered to the outside of the system toilet. In order to prevent scattering of toilet litter, a full-cover-type upper container that completely covers the upper side of the excretion container may be used. However, there are a certain number of pets that do not like full-cover-type upper containers. For example, in the case of the cat, about 50% of cats do not like full-cover-type upper containers. Thus, pet owners have demanded an upper container that is a half-type upper container that does not cover the upper side of the excretion container and is yet less likely to experience scattering of toilet litter.

An aspect of the present invention has been made in view of the above circumstances, and relates to a system toilet for a pet capable of effectively suppressing scattering of toilet litter to the outside due to litter scratching by a pet.

### Solution to Problem

A system toilet for a pet according to an aspect of the present invention includes: an excretion container configured to store toilet litter and having a liquid-permeable bottom surface portion; a tray placed below the excretion container and configured to store an absorbent sheet for absorbing liquid that has passed through the bottom surface portion; a lower container configured to hold the tray; and an upper container placed above the excretion container, an opening portion for a pet to enter and exit being formed in the upper container, an upper side of the upper container being opened; in the system toilet for a pet, the upper container has: a pair of sidewall portions provided to face each other on both sides in a width direction of the opening portion and extending in a front-rear direction that is a depth direction of the upper container; and a rear wall portion facing the opening portion in the front-rear direction, and a height of a sidewall highest portion having a highest height in the sidewall portion is higher than a height of a rear-wall highest portion having a highest height in the rear wall portion.

In the system toilet for a pet according to an aspect of the present invention, in what is called a half-type upper container, in which the upper side is opened, the height of the sidewall highest portion having the highest height in each of the pair of sidewall portions is set higher than the height of the rear-wall highest portion having the highest height in the rear wall portion. Owners of pets that do not like full-cover-type upper containers prefer half-type upper containers. However, in the half-type upper container, as compared to the full-cover-type upper container, there has been a concern that toilet litter is scattered to the outside of the toilet when the pet scratches toilet litter or on other occasions. In this respect, in the system toilet for a pet according to an aspect of the present invention, since the height of the sidewall highest portion is set high, specifically higher than the height of the rear-wall highest portion, even if the pet scratches toilet litter after excretion or on other occasions, the toilet litter can be bounced back by the sidewall highest portion, and scattering of toilet litter to the outside of the toilet can be effectively suppressed. Further, in the system toilet for a pet according to an aspect of the present invention, a pet that has entered the toilet from the opening portion of the entrance faces the rear wall portion, and excretes in a state of directing the body to the rear wall portion having the rear-wall highest portion lower than the sidewall highest portion. In this case, it is considered that the pet hardly feels stress due to a feeling of being trapped and therefore excessive litter scratching by the pet due to stress is suppressed; thus, scattering of toilet litter to the outside is effectively suppressed. As above, by using the system toilet for a pet according to an aspect of the present invention, scattering of toilet litter to the outside due to litter scratching by the pet can be effectively suppressed. Further, by the configuration in which the sidewall highest portion is formed and the sidewall portion has a sufficient height, for example, when the owner detaches the upper container from the lower container at the time of cleaning or the like and holds the upper container upside down, the owner can stably hold the upper container without dropping the upper container or spilling urine or toilet litter residues from the upper container.

When areas obtained by dividing the upper container into three equal parts in the front-rear direction are referred to as an entrance-side area, an intermediate area, and a depth-side area in this order from the front side, the sidewall highest portion may be formed in an area of the sidewall portion excluding a deepest portion of the depth-side area. In the case where the sidewall highest portion is formed in the deepest portion of the depth-side area, a pet excreting in a state of directing the body to the rear wall portion may be caused to feel stress due to a feeling of being trapped. In this respect, by the sidewall highest portion being formed in an area excluding the deepest portion, a situation where the pet feels stress and excessively scratches litter can be suppressed more effectively. Further, by the sidewall highest portion being formed in an area excluding the deepest portion, the sidewall highest portion can be easily placed near the centroid position of the upper container, and therefore the owner can hold the upper container more stably when holding the upper container upside down.

The sidewall highest portion may be formed in the sidewall portion in the intermediate area. By the sidewall highest portion being formed in the intermediate area, a situation where the line of sight of the pet is blocked by a portion having a high height can be effectively suppressed in both the case where the pet excretes in a state of directing the body to the rear wall portion and the case where the pet excretes in a state of directing the body to the entrance side. Thereby, a situation where the pet feels stress and excessively scratches litter can be suppressed more effectively. Further, for example, since a pet such as a cat scratches toilet litter with the front leg, scattering of toilet litter is most often from a central portion of the sidewall portion; in this regard, scattering of toilet litter can be effectively suppressed by the configuration in which the sidewall portion in the intermediate area is designed to be the sidewall highest portion. Further, by the sidewall highest portion being formed in the intermediate area, the sidewall highest portion can be easily placed near the centroid position of the upper container, and therefore the owner can hold the upper container more stably when holding the upper container upside down.

The height of the sidewall portion in the entrance-side area and the height of the sidewall portion in the depth-side area may be lower than the height of the sidewall portion in the intermediate area. By such a configuration, a situation where the line of sight of the pet is blocked by a portion having a high height can be effectively suppressed in both the case where the pet excretes in a state of directing the body to the rear wall portion and the case where the pet excretes in a state of directing the body to the entrance side. Thereby, a situation where the pet feels stress and excessively scratches litter can be suppressed more effectively. Further, a portion having a high height can be easily placed near the centroid position of the upper container, and therefore the owner can hold the upper container more stably when holding the upper container upside down.

The upper container may further have a hook provided in a lower end portion of the sidewall portion and configured to be coupled to a coupling portion of the lower container, and the hook may be provided in a lower end portion of the sidewall portion in the intermediate area. Thus, by a hook being placed in the intermediate area similarly to the sidewall highest portion, the hand reaches the sidewall highest portion at the minimum distance after the upper container is detached from the lower container, and thus the owner's work such as cleaning can be made easier.

The height of a rear-wall lowest portion having the lowest height in the rear wall portion may be 90% or less of the height of the sidewall highest portion. By such a configuration, the rear-wall lowest portion can be made sufficiently lower than the sidewall highest portion, and the stress of the pet can be reduced by causing the pet to feel a feeling of spaciousness.

The height of the sidewall portion may be 60% or more of the height of the sidewall highest portion in an area of 80% or more in the front-rear direction. By such a configuration, in the sidewall portion, an area having a substantially equal height to the sidewall highest portion can be sufficiently provided; thus, when the pet scratches toilet litter after excretion or on other occasions, the toilet litter can be appropriately bounced back by the sidewall portion.

When the rear wall portion is divided into three equal parts in the width direction, and the central portion is referred to as a rear-wall central portion and each of both end portions is referred to as a rear-wall end portion, the height of the rear-wall central portion may be lower than the height of the rear-wall end portion, and a partial area of the rear-wall central portion may be a rear-wall lowest portion having the lowest height in the rear wall portion. By such a configuration, when the owner turns the upper container upside down and holds end portions in the front-rear direction, the owner can stably hold the rear-wall central portion, which has a lower height than other areas and on which fingers can be easily hooked. Further, by lowering the height of the rear-wall central portion, which is likely to receive the line of sight of a pet excreting while directing the body to the rear wall portion, the stress of the pet can be reduced.

An upper end portion of the rear-wall lowest portion may be located in a rearmost position in the front-rear direction among the upper end portions of the areas of the rear wall portion. By such a configuration, when the owner turns the upper container upside down and holds end portions in the front-rear direction, the owner can stably hold a portion that has a low height and on which fingers can be easily hooked. Further, the pet is likely to naturally go to the deepest part having a low height; then, by lowering the height of a portion that is likely to receive the line of sight of a pet excreting while using the entire toilet and directing the body to the rear wall portion, the stress of the pet can be reduced.

In the rear wall portion, an area having a higher height may be more inclined frontward in the front-rear direction. By such a configuration, the line of sight of the pet escapes from an area having a low height; meanwhile, by the configuration in which an area having a relatively high height is inclined frontward, the pet excreting can make an action such as putting the face on the area having a high height; thus, the stress of the pet can be reduced more.

The upper container may further have a sidewall extension portion extending downward and inward in the width direction from an upper end portion of the sidewall portion, and the sidewall extension portion may be provided at least in an upper end portion of the sidewall highest portion. When the owner holds the upper container upside down, it is conceivable that urine splashes and dust attached to the inside of the sidewall portion, etc. may drop from an upper end portion of the upper container to the floor. In this respect, by the configuration in which a sidewall extension portion extending downward and inward in the width direction is provided in an upper end portion of the sidewall highest portion, urine splashes, etc. flowing from an area near the sidewall highest portion in the sidewall portion toward the floor can be received by the sidewall extension portion, and dropping of urine splashes, etc. to the floor can be appropriately suppressed.

The upper container may further have a rear-wall extension portion extending downward and forward in the front-rear direction from an upper end portion of the rear wall portion; the sidewall extension portion may be provided in the entire area of the sidewall portion, the rear-wall extension portion may be provided in the entire area of the rear wall, and the sidewall extension portion and the rear-wall extension portion may be provided continuously with each other. By such a configuration, urine splashes, etc. flowing from the entire area of the sidewall portion and the entire area of the rear wall portion toward the floor can be received by the sidewall extension portion or the rear-wall extension portion, and dropping of urine splashes, etc. to the floor can be appropriately suppressed.

The upper container may further have: a sidewall interception portion provided on the sidewall extension portion and extending between the sidewall extension portion and the sidewall portion; and a rear-wall interception portion provided on the rear-wall extension portion and extending between the rear-wall extension portion and the rear wall portion. By such a configuration, urine splashes, etc. received by the sidewall extension portion and the rear-wall extension portion can be accumulated in a predetermined area by the sidewall interception portion and the rear-wall interception portion, and dropping of urine splashes, etc. to the floor can be suppressed more appropriately.

The sidewall interception portion and the rear-wall interception portion may be provided at predetermined intervals on the sidewall extension portion and the rear-wall extension portion provided continuously with each other. By such a configuration, by adjusting the arrangement of a plurality of interception portions, an area where urine splashes, etc. are to be accumulated can be appropriately set, and dropping of urine splashes, etc. to the floor can be suppressed more appropriately.

The sidewall portion may be formed of a curved surface projecting downward and outward in the width direction from an upper end portion. By such a configuration, the fitting feeling can be improved to run along the palm, and the sidewall portion can be easily gripped; thus, the upper container can be held more stably. Further, by the sidewall portion being designed to be a curved surface, when the owner holds the upper container upside down, urine splashes and dust attached to the inside of the sidewall portion flow along the curved surface; therefore, the time and the distance until urine splashes, etc. drop can be increased, and dropping of urine splashes, etc. to the floor can be appropriately suppressed.

The sidewall portion may have an inflection portion on the lower end side. Thus, by an inflection portion being provided on the lower end side, where fingers are to be located, the upper container can be held more stably by placing fingers along the inflection portion.

### Advantageous Effects of Invention

By a system toilet for a pet according to an aspect of the present invention, scattering of toilet litter to the outside due to litter scratching by a pet can be effectively suppressed.

### Brief Description of Drawings

FIG. 1 is a perspective view of a system toilet for a pet according to the present embodiment.
FIG. 2 is an exploded perspective view of the system toilet for a pet shown in FIG. 1.
FIG. 3 is a side view of the system toilet for a pet shown in FIG. 1.
FIG. 4 is a rear view of the system toilet for a pet shown in FIG. 1.
FIG. 5 is a front view of an upper container included in a system tray for a pet shown in FIG. 1.
FIG. 6 is a plan view of the upper container shown in FIG. 5.
FIG. 7 is a bottom view of the upper container shown in FIG. 5.

### Description of Embodiments

Hereinbelow, a system toilet for a pet according to an embodiment of the present invention is described in detail with reference to the drawings. In the drawings, the same or corresponding portions are denoted by the same reference numerals, and a repeated description is omitted. The drawings are schematic ones, and the ratios of dimensions, etc. may be different from the actual ones.

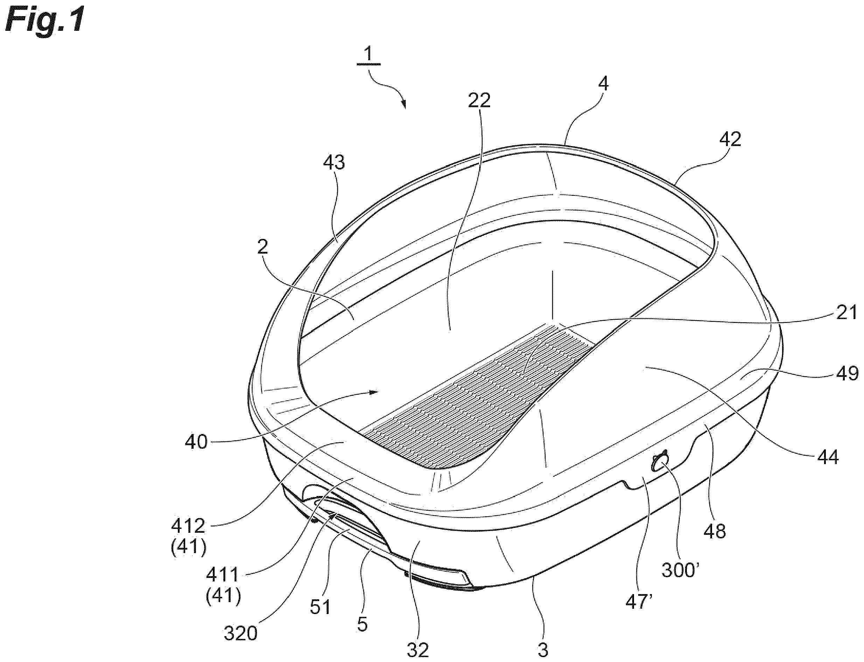

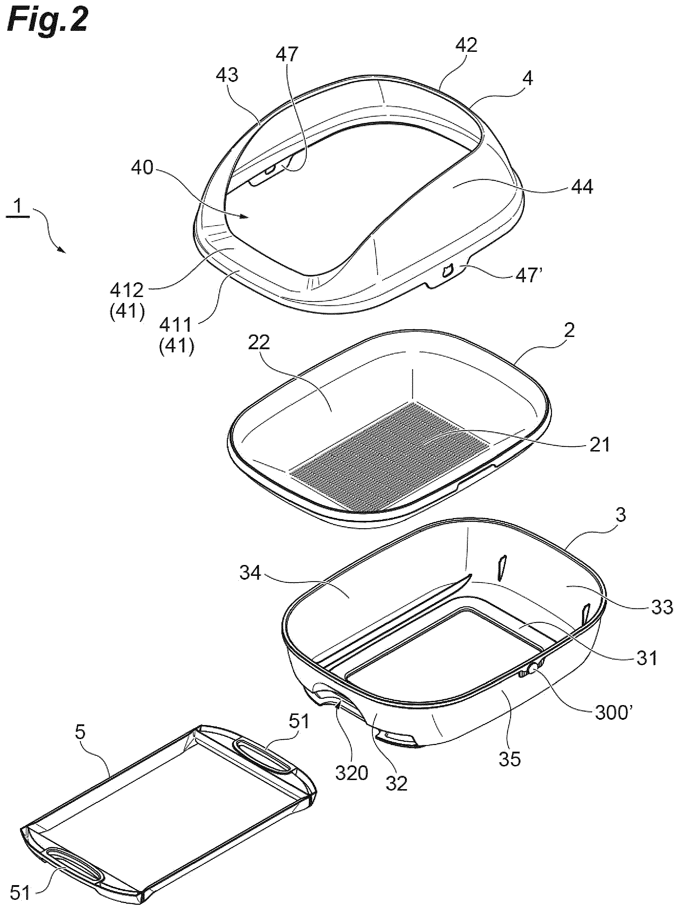

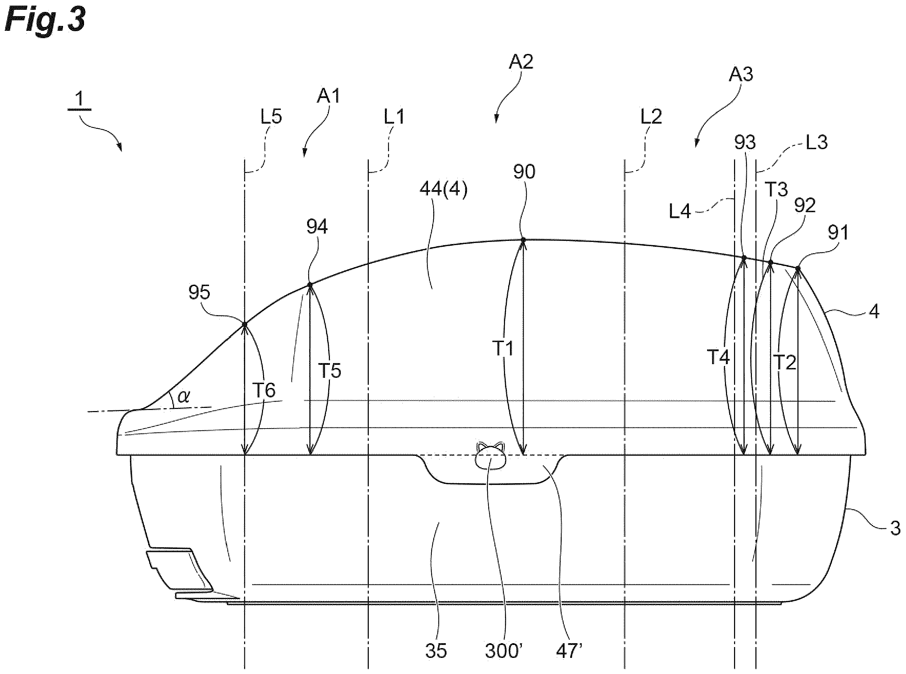

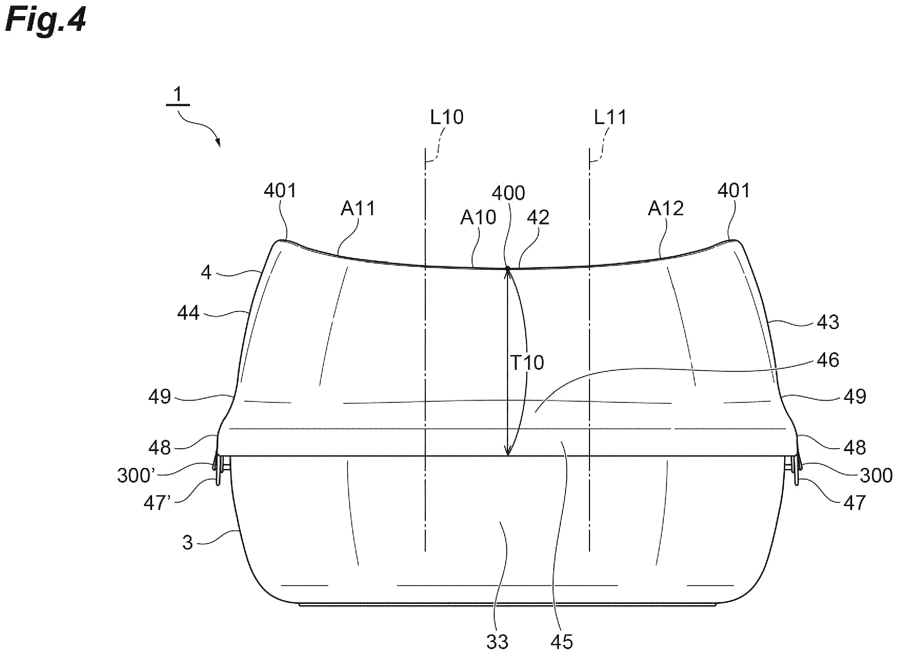

FIG. 1 is a perspective view of a system toilet for a pet 1 according to the present embodiment. FIG. 2 is an exploded perspective view of the system toilet for a pet 1. FIG. 3 is a side view of the system toilet for a pet 1. FIG. 4 is a rear view of the system toilet for a pet 1. The system toilet for a pet 1 according to the present embodiment is, for example, a system toilet for excretion of a cat that is a pet. The system toilet for a pet 1 according to the present embodiment may be a system toilet for excretion of a pet other than a cat.

As shown in FIGS. 1 to 4, the system toilet for a pet 1 includes an excretion container 2, a lower container 3, an upper container 4, and a tray 5. In the system toilet for a pet 1, what is called a half-type upper container 4, in which the upper side of the upper container 4 is opened, is employed.

In the following, the up-down direction of the system toilet for a pet 1 may be referred to as an "up-down direction", the depth direction that is the longitudinal direction may be referred to as a "front-rear direction", and a direction orthogonal to the up-down direction and the front-rear direction may be referred to as a "width direction". In the "up-down direction", the side of the upper container 4 as viewed from the lower container 3 is referred to as "upper", and the side of the lower container 3 as viewed from the upper container 4 is referred to as "lower". Further, in the "front-rear direction", the side of an opening portion 40 as viewed from a rear wall portion 42 of the upper container 4 is referred to as "front", and the side of the rear wall portion 42 as viewed from the opening portion 40 is referred to as "rear".

The excretion container 2 is a container that stores toilet litter (not illustrated). The excretion container 2 has a liquid-permeable bottom surface portion 21 and a wall surface 22. The toilet litter is a granular substance that can absorb a liquid such as urine or allow such a liquid to pass therethrough. The toilet litter is formed by molding, for example, bentonite, which can cover feces and can absorb liquid, wood or paper coated with a water repellent coating, or zeolite, silica gel, a mineral, or the like having deodorizing power into a substantially spherical shape having a diameter of about several millimeters to several centimeters, and known toilet litter may be used. In the case where solidifying sand is used as toilet litter, the liquid-permeable bottom surface portion 21 may be clogged; thus, it is preferable that solidifying sand not be employed in the present system toilet for a pet 1. The toilet litter is placed on the bottom surface portion 21.

The bottom surface portion 21 is a plate-like member in which crosspieces are formed in a duckboard-like shape and a regular gap is provided between crosspieces. The bottom surface portion 21 is formed in a substantially rectangular shape in a planar view. The wall surface 22 is a portion formed to rise upward from the peripheral edge of the bottom surface portion 21. That is, the wall surface 22 is formed to rise upward from both end portions in the front-rear direction and both end portions in the width direction of the bottom surface portion 21. The shape in a planar view of the bottom surface portion 21 may be a shape other than a rectangular shape as long as toilet litter can be stored thereon. Excrement excreted by the pet passes through toilet litter, passes through the gaps of the bottom surface portion 21 formed by duckboard-like crosspieces, and drops to the lower container 3 (specifically, the tray 5 held by the lower container 3) placed below the excretion container 2. The excretion container 2 is formed of, for example, a resin such as a plastic, but is not limited thereto.

The tray 5 is placed below the excretion container 2, and stores an absorbent sheet (not illustrated) for absorbing liquid (excrement) that has passed through the bottom surface portion 21. On the front side of the tray 5, a tray handle portion 51 on which the user can hook the hand to pull out the tray 5 frontward is formed. As shown in FIG. 2, the tray handle portion 51 may be formed not only on the front side but also on the rear side of the tray 5. In this case, the tray 5 is designed to have a front-rear symmetrical shape. Thus, by the configuration in which the tray 5 is designed to have a front-rear symmetrical shape and tray handle portions 51 are formed both on the front side and on the rear side, pulling-out of the tray 5 via the tray handle portion 51 can be performed even if the front and rear of the tray 5 are switched, for example. An area of the absorbent sheet where liquid is absorbed is determined to some extent; by changing the orientation of the absorbent sheet by switching the front and rear of the tray 5, liquid can be absorbed in an area different from an area where liquid has already been absorbed. Thus, by switching the front and rear of the tray 5, one absorbent sheet can be effectively used to the maximum. The tray 5 is formed in smaller dimensions than the lower container 3 to be housed inside the lower container 3 and to be swingable. Although in the present embodiment the tray 5 is pulled out in the horizontal direction, the tray 5 is not limited thereto, and may be pulled out obliquely upward, for example.

The lower container 3 is a container that holds the tray 5. The lower container 3 houses the tray 5 inside the lower container 3 such that the tray 5 can be pulled out in a swingable manner. As shown in FIG. 2, the lower container 3 includes a bottom surface portion 31 and wall surfaces 32, 33, 34, and 35. The bottom surface portion 31 is a portion facing an installation surface on which the system toilet for a pet 1 is installed. The bottom surface portion 31 is formed in a rectangular shape in a planar view. A central portion of the bottom surface portion 31 may be an opening.

The wall surface 32 is a portion formed to rise upward from a front end portion of the bottom surface portion 31. In the wall surface 32, an opening 320 for pulling out the tray 5 is formed. The wall surface 33 is a portion formed to rise upward from a rear end portion of the bottom surface portion 31. The wall surfaces 34 and 35 are portions formed to rise upward from both end portions in the width direction of the bottom surface portion 31. The wall surfaces 32, 33, 34, and 35 are continuously formed, and the entire periphery of the bottom surface portion 31 is surrounded by the wall surfaces 32, 33, 34, and 35. A wall surface 22 of the excretion container 2 is fitted to upper end portions of the wall surfaces 32, 33, 34, and 35. The upper container 4 is attached to cover upper end portions of the wall surfaces 32, 33, 34, and 35 (details will be described later). Coupling portions 300 and 300' to be coupled to hooks 47 and 47' of the upper container 4 are provided in central portions in the front-rear direction and at the same time upper end portions of the wall surfaces 34 and 35 (details will be described later).

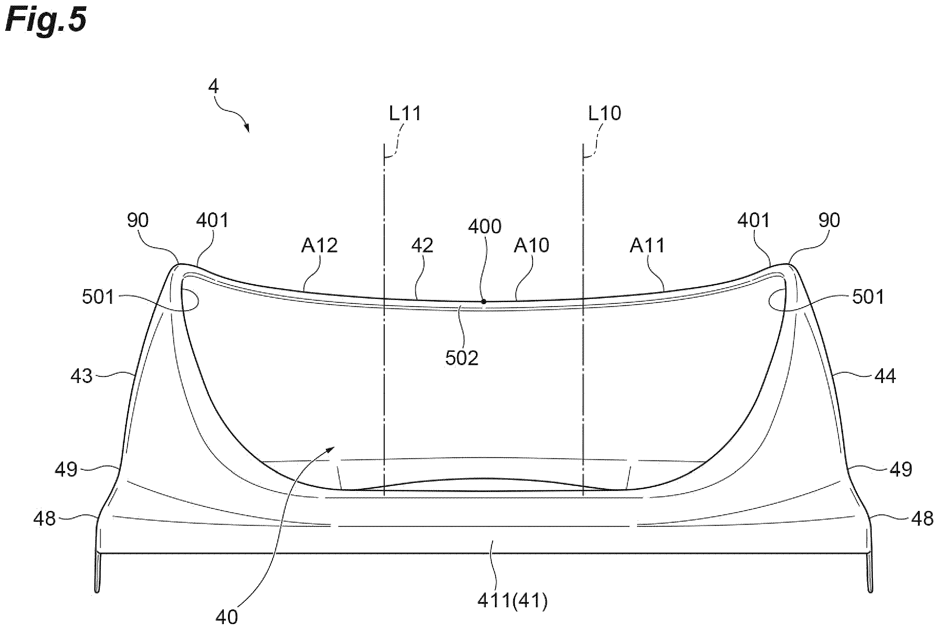

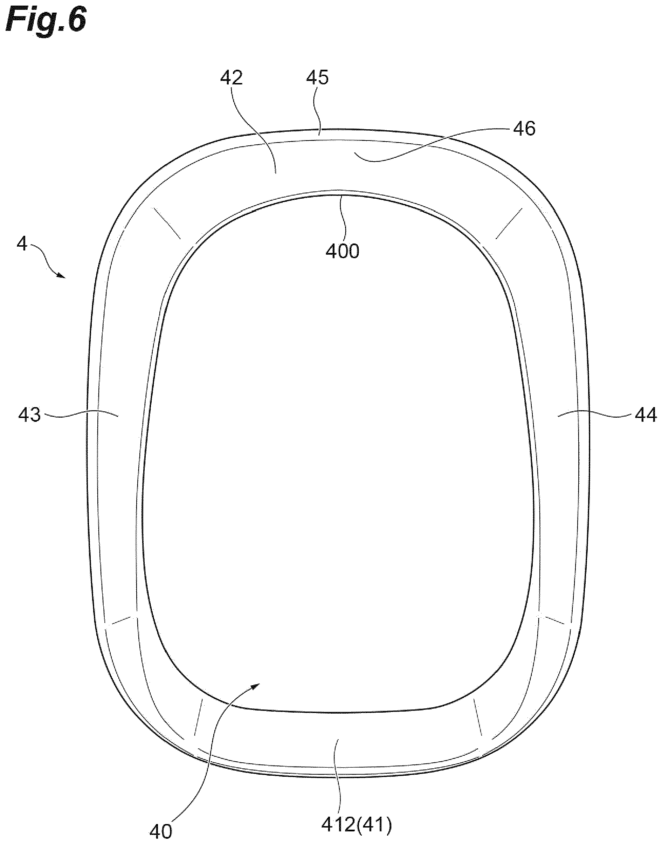

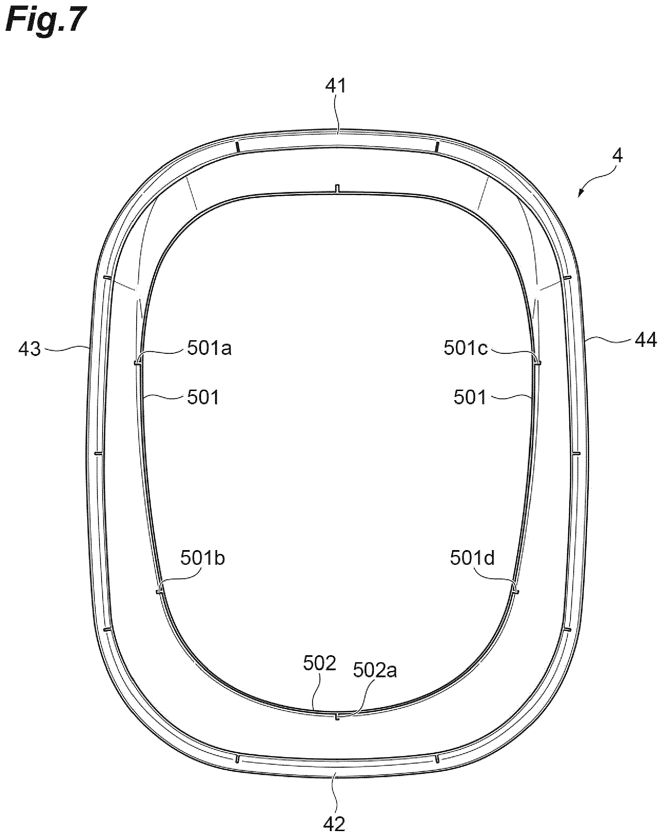

The upper container 4 is a container that is placed above the excretion container 2 and in which an opening portion 40 for a pet to enter and exit is formed. As described above, the upper container 4 is what is called a half-type upper container, in which the upper side is opened. In the following, a detailed configuration of the upper container 4 is described with reference to FIGS. 5 to 7. FIG. 5 is a front view of the upper container 4 included in the system toilet for a pet 1. FIG. 6 is a plan view of the upper container 4. FIG. 7 is a bottom view of the upper container 4.

As shown in FIG. 1, the upper container 4 includes a front wall portion 41, a rear wall portion 42, and a pair of sidewall portions 43 and 44. In the present embodiment, the front wall portion 41, the rear wall portion 42, and the pair of sidewall portions 43 and 44 are integrally formed. The upper container 4 does not have a bottom surface portion, and is penetrated in the up-down direction.

The front wall portion 41 is a portion provided on the front lower side of an opening portion 40 for a pet to enter and exit. The front wall portion 41 includes an attachment portion 411 and a guide portion 412. The attachment portion 411 is a portion to be attached to an upper end portion of the wall surface 32 of the lower container 3, and is a portion extending in the up-down direction and in the width direction along the wall surface 32. As shown in FIG. 1, the attachment portion 411 is placed on the front side of the wall surface 32.

The guide portion 412 is a portion extending rearward from an upper end portion of the attachment portion 411. The guide portion 412 extends rearward toward the opening portion 40 without inclination (that is, substantially horizontally). Thereby, a pet that enters from the opening portion 40 can easily put the legs on the guide portion 412, and can easily enter the toilet. In the case where, for example, the guide portion 412 is inclined downward in a direction away from the opening portion 40, litter dropped from the legs of the pet to the guide portion 412 may roll down to the floor outside the toilet; however, such a situation can be suppressed by the guide portion 412 being set substantially horizontal as described above. When the owner detaches the upper container 4 from the lower container 3 and holds the upper container 4 inside out, dropping to the floor of urine splashes and dust attached to the back side of the upper container 4 can be suppressed by the guide portion 412 being set substantially horizontal.

The pair of sidewall portions 43 and 44 are portions provided to face each other on both sides in the width direction of the opening portion 40 and extending in the front-rear direction. Front end portions of the sidewall portions 43 and 44 are continuous to both end portions in the width direction of the front wall portion 41. As shown in FIGS. 4 and 5, the sidewall portions 43 and 44 are formed of curved surfaces projecting downward and outward in the width direction from upper end portions. Further, as shown in FIGS. 4 and 5, each of the sidewall portions 43 and 44 has an inflection portion 49 on the lower end side. Each of the sidewall portions 43 and 44 has a shape in which the shape of the curved surface greatly changes in the inflection portion 49, and further extends downward to project outward. The sidewall portions 43 and 44 are attached to upper end portions of the wall surfaces 34 and 35 of the lower container 3 in lower end portions 48 below the inflection portions 49. As shown in FIG. 1, hooks 47 and 47' extending downward are provided in substantially central portions in the front-rear direction of the lower end portions 48 of the sidewall portions 43 and 44. That is, the upper container 4 further has hooks 47 and 47' provided in lower end portions of the sidewall portions 43 and 44 and configured to be coupled to the coupling portions 300 and 300' of the lower container 3, and the hooks 47 and 47' are provided in lower end portions of the sidewall portions 43 and 44 of an intermediate area A2 (see FIG. 3) described later. By the hooks 47 and 47' being coupled to the coupling portions 300 and 300' of the wall surfaces 34 and 35, respectively, the upper container 4 is attached and fixed to the lower container 3.

The height in the up-down direction in each area of the sidewall portions 43 and 44 will now be described with reference to FIG. 3. Now, areas obtained by dividing the upper container 4 into three equal parts in the front-rear direction are referred to as an entrance-side area A1, an intermediate area A2, and a depth-side area A3 in this order from the front side. In the example shown in FIG. 3, the area more on the front side than imaginary line L1 is the entrance-side area A1, the area between imaginary lines L1 and L2 is the intermediate area A2, and the area more on the rear side than imaginary line L2 is the depth-side area A3. The heights of the sidewall portions 43 and 44 in the entrance-side area A1 and the heights of the sidewall portions 43 and 44 in the depth-side area A3 are lower than the heights of the sidewall portions 43 and 44 in the intermediate area A2.

As shown in FIG. 3, sidewall highest portions 90 having the highest height in the sidewall portions 43 and 44 are formed in areas of the sidewall portions 43 and 44 excluding deepest portions (rearmost end portions) 91 in the depth-side area A3. More specifically, the sidewall highest portions 90 are formed in the sidewall portions 43 and 44 in the intermediate area A2. The deepest portions 91 are the lowest points having the lowest height in the depth-side area A3 of the sidewall portions 43 and 44, and the height T2 of the deepest portion 91 is 90% or less of the height T1 of the sidewall highest portion 90. When a line segment defining an area of 45% on the depth side (rear side) in the depth-side area A3 is referred to as imaginary line L3, the height T3 of a depth-side portion 92 more on the depth side (rear side) than imaginary line L3 in each of the sidewall portions 43 and 44 is 90% or less of the height T1 of the sidewall highest portion 90. Further, when a line segment defining an area of 55% on the depth side (rear side) in the depth-side area A3 is referred to as imaginary line L4, the height T4 of a depth-side portion 93 more on the depth side (rear side) than imaginary line L4 in each of the sidewall portions 43 and 44 is 95% or less of the height T1 of the sidewall highest portion 90.

The height T5 of an entrance portion 94 that is a portion of either of the sidewall portions 43 and 44 in the entrance-side area A1 is 90% or less of the height T1 of the sidewall highest portion 90. That is, each of the sidewall portions 43 and 44 in the entrance-side area A1 is 90% or less of the height T1 of the sidewall highest portion 90 in any area. When a line segment dividing the entrance-side area A1 into two equal parts in the front-rear direction is referred to as imaginary line L5, the height T6 of an intermediate point 95 that is a portion of each of the sidewall portions 43 and 44 in contact with imaginary line L5 is 67% or less of the height T1 of the sidewall highest portion 90. The height of each of the sidewall portions 43 and 44 is 60% or more of the height T1 of the sidewall highest portion 90 in an area of 80% or more in the front-rear direction. The rising angle α in a front end portion of each of the sidewall portions 43 and 44 is set to, for example, 60° or more. Thus, by the rising angle α being set relatively large, that is, 60° or more, scattering of toilet litter from the sidewall portions 43 and 44 in the entrance-side area A1 can be suppressed.

The rear wall portion 42 is, as shown in FIG. 1, a portion facing the opening portion 40 in the front-rear direction, and is a portion extending in the width direction in a rear end portion of the upper container 4. Both end portions in the width direction of the rear wall portion 42 are continuous to rear end portions of the sidewall portions 43 and 44. As shown in FIGS. 4 and 6, the rear wall portion 42 is formed of a curved surface projecting downward and rearward from an upper end portion. Further, as shown in FIGS. 4 and 6, the rear wall portion 42 has an inflection portion 46 on the lower end side. The rear wall portion 42 has a shape in which the shape of the curved surface greatly changes in the inflection portion 46, and further extends downward to project rearward. The rear wall portion 42 is, in a lower end portion 45 below the inflection portion 46, attached to an upper end portion of the wall surface 33 of the lower container 3.

The height in the up-down direction in each area of the rear wall portion 42 will now be described with reference to FIGS. 4 and 5. Now, for areas obtained by dividing the rear wall portion 42 into three equal parts in the width direction, the central portion is referred to as a rear-wall central portion A10, and both end portions are referred to as rear-wall end portions A11 and A12. In the example shown in FIGS. 4 and 5, the portion sandwiched between imaginary lines L10 and L11 is the rear-wall central portion A10, the portion more on the outside in the width direction than imaginary line L10 is the rear-wall end portion A11, and the portion more on the outside in the width direction than imaginary line L11 is the rear-wall end portion A12. The height of the rear-wall central portion A10 is lower than the heights of the rear-wall end portions A11 and A12. A partial area of the rear-wall central portion A10 is a rear-wall lowest portion 400 having the lowest height in the rear wall portion 42. Specifically, the rear-wall lowest portion 400 is located in a central portion in the width direction of the rear-wall central portion A10 (that is, a central portion in the width direction of the rear wall portion 42). The height T10 of the rear-wall lowest portion 400 is, for example, 95% or less of the height T1 of the sidewall highest portion 90.

The rear wall portion 42 has the rear-wall lowest portion 400 in a central portion in the width direction, and increases in height toward both end portions in the width direction. That is, an end portion in the width direction of each of the rear-wall end portions A11 and A12 of the rear wall portion 42 is defined as a rear-wall highest portion 401 having the highest height in the rear wall portion 42. As shown in FIG. 5, the height of the sidewall highest portion 90 having the highest height in each of the sidewall portions 43 and 44 is higher than the height of the rear-wall highest portion 401 having the highest height in the rear wall portion 42.

As shown in FIG. 6, an upper end portion of the rear-wall lowest portion 400 is located in a rearmost position in the front-rear direction among the upper end portions of the areas of the rear wall portion 42. As shown in FIG. 6, in the rear wall portion 42, an area having a higher height (that is, areas of both end portions in the width direction) is more inclined frontward in the front-rear direction.

As shown in FIGS. 5 and 7, the upper container 4 has sidewall extension portions 501 extending downward and inward in the width direction from upper end portions of the sidewall portions 43 and 44. The sidewall extension portion 501 is provided at least in an upper end portion of the sidewall highest portion 90. In the present embodiment, the sidewall extension portions 501 are provided in the entire areas of the sidewall portions 43 and 44. Such sidewall extension portions 501 are configured to, when the owner holds the upper container 4 upside down, suppress a situation where urine splashes, dust, etc. attached to the insides of the sidewall portions 43 and 44 drop from upper end portions of the sidewall portions 43 and 44 to the floor. That is, the sidewall extension portions 501 are configured to receive urine splashes, dust, etc. flowing from inner upper end portions of the sidewall portions 43 and 44 toward the floor. The upper container 4 further has a rear-wall extension portion 502 extending downward and forward in the front-rear direction from an upper end portion of the rear wall portion 42. The rear-wall extension portion 502 is provided in the entire area of the rear wall portion 42. Such a rear-wall extension portion 502 is configured to receive urine splashes, dust, etc. flowing from an inner upper end portion of the rear wall portion 42 toward the floor. The sidewall extension portion 501 and the rear-wall extension portion 502 are provided continuously with each other. The upper container is detached and cleaned at a frequency of, for example, about once a week, and is, at the time of cleaning, turned upside down and carried to a cleaning place (for example, a bathroom).

As shown in FIG. 7, the upper container 4 has two sidewall interception portions 501a and 501b provided on a sidewall extension portion 501 and extending between the sidewall extension portion 501 and the sidewall portion 43. Further, the upper container 4 has two sidewall interception portions 501c and 501d provided on a sidewall extension portion 501 and extending between the sidewall extension portion 501 and the sidewall portion 44. Such sidewall interception portions 501a to 501d are configured to define areas of the sidewall extension portions 501 where urine splashes, dust, etc. are to be accumulated. Further, the upper container 4 has a rear-wall interception portion 502a provided on the rear-wall extension portion 502 and extending between the rear-wall extension portion 502 and the rear wall portion 42. Such a rear-wall interception portion 502a is configured to define areas of the rear-wall extension portion 502 where urine splashes, dust, etc. are to be accumulated. The sidewall interception portions 501a to 501d and the rear-wall interception portion 502a are provided at predetermined intervals on the sidewall extension portions 501 and the rear-wall extension portion 502 provided continuously with each other.

Next, working and effect of the system toilet for a pet 1 according to the present embodiment are described.

A system toilet for a pet 1 according to the present embodiment includes: an excretion container 2 configured to store toilet litter and having a liquid-permeable bottom surface portion 21; a tray 5 placed below the excretion container 2 and configured to store an absorbent sheet for absorbing liquid that has passed through the bottom surface portion 21 (or a collection container configured to collect liquid (a urination tray or the like)); a lower container 3 configured to hold the tray 5; and an upper container 4 placed above the excretion container 2, an opening portion 40 for a pet to enter and exit being formed in the upper container 4, the upper side of the upper container 4 being opened; in the system toilet for a pet 1, the upper container 4 has: a pair of sidewall portions 43 and 44 provided to face each other on both sides in the width direction of the opening portion 40 and extending in the front-rear direction that is the depth direction of the upper container 4; and a rear wall portion 42 facing the opening portion 40 in the front-rear direction, and as shown in FIG. 5 the height of a sidewall highest portion 90 having the highest height in each of the sidewall portions 43 and 44 is higher than the height of a rear-wall highest portion 401 having the highest height in the rear wall portion 42.

In the system toilet for a pet 1 according to the present embodiment, in what is called a half-type upper container 4, in which the upper side is opened, the height of the sidewall highest portion 90 having the highest height in each of the pair of sidewall portions 43 and 44 is set higher than the height of the rear-wall highest portion 401 having the highest height in the rear wall portion 42. Owners of pets that do not like full-cover-type upper containers prefer half-type upper containers. However, in the half-type upper container, as compared to the full-cover-type upper container, there has been a concern that toilet litter is scattered to the outside of the toilet when the pet scratches toilet litter or on other occasions.

In this respect, in the system toilet for a pet 1 according to the present embodiment, since the height of the sidewall highest portion 90 is set high, specifically higher than the height of the rear-wall highest portion 401, even if the pet scratches toilet litter after excretion or on other occasions, the toilet litter can be bounced back by the sidewall highest portions 90 and their surrounding portions in the sidewall portions 43 and 44, and scattering of toilet litter to the outside of the toilet can be effectively suppressed. Further, in the system toilet for a pet 1, a pet that has entered the toilet from the opening portion 40 of the entrance faces the rear wall portion 42, and excretes in a state of directing the body to the rear wall portion 42 having the rear-wall highest portion 401 lower than the sidewall highest portion 90. In this case, the pet hardly feels stress due to a feeling of being trapped, and therefore excessive litter scratching by the pet due to stress is suppressed; thus, scattering of toilet litter to the outside is effectively suppressed. As above, by using the system toilet for a pet 1 according to the present embodiment, scattering of toilet litter to the outside due to litter scratching by the pet can be effectively suppressed. Further, by the configuration in which the sidewall highest portion 90 is formed and each of the sidewall portions 43 and 44 has a sufficient height, for example, when the owner detaches the upper container 4 from the lower container 3 at the time of cleaning or the like and holds the upper container 4 upside down, the owner can stably hold the upper container 4 without dropping the upper container 4 or spilling urine or toilet litter residues from the upper container 4.

When areas obtained by dividing the upper container 4 into three equal parts in the front-rear direction are referred to as an entrance-side area A1, an intermediate area A2, and a depth-side area A3 in this order from the front side, the sidewall highest portion 90 may be formed in an area of each of the sidewall portions 43 and 44 excluding a deepest portion 91 of the depth-side area A3. In the case where the sidewall highest portion 90 is formed in the deepest portion 91 of the depth-side area A3, a pet excreting in a state of directing the body to the rear wall portion 42 may be caused to feel stress due to a feeling of being trapped. In this respect, by the sidewall highest portion 90 being formed in an area excluding the deepest portion 91, a situation where the pet feels stress and excessively scratches litter can be suppressed more effectively. Further, by the sidewall highest portion 90 being formed in an area excluding the deepest portion 91, the sidewall highest portion 90 can be easily placed near the centroid position (near the center) of the upper container 4, and therefore the owner can hold the upper container 4 more stably when holding the upper container 4 upside down.

The sidewall highest portion 90 may be formed in each of the sidewall portions 43 and 44 in the intermediate area A2. By the sidewall highest portion 90 being formed in the intermediate area A2, a situation where the line of sight of the pet is blocked by a portion having a high height can be effectively suppressed in both the case where the pet excretes in a state of directing the body to the rear wall portion 42 and the case where the pet excretes in a state of directing the body to the entrance side. Thereby, a situation where the pet feels stress and excessively scratches litter can be suppressed more effectively. Further, for example, since a pet such as a cat scratches toilet litter with the front leg, scattering of toilet litter is most often from central portions of the sidewall portions 43 and 44; in this regard, scattering of toilet litter can be effectively suppressed by the configuration in which the sidewall portions 43 and 44 in the intermediate area A2 are designed to be the sidewall highest portions 90. Further, by the sidewall highest portion 90 being formed in the intermediate area A2, the sidewall highest portion 90 can be easily placed near the centroid position of the upper container 4, and therefore the owner can hold the upper container 4 more stably when holding the upper container 4 upside down.

The heights of the sidewall portions 43 and 44 in the entrance-side area A1 and the heights of the sidewall portions 43 and 44 in the depth-side area A3 may be lower than the heights of the sidewall portions 43 and 44 in the intermediate area A2. By such a configuration, a situation where the line of sight of the pet is blocked by a portion having a high height can be effectively suppressed in both the case where the pet excretes in a state of directing the body to the rear wall portion 42 and the case where the pet excretes in a state of directing the body to the entrance side. Thereby, a situation where the pet feels stress and excessively scratches litter can be suppressed more effectively. Further, a portion having a high height can be easily placed near the centroid position of the upper container 4, and therefore the owner can hold the upper container 4 more stably when holding the upper container 4 upside down.

The upper container 4 may further have hooks 47 and 47' provided in lower end portions 48 of the sidewall portions 43 and 44 and configured to be coupled to coupling portions 300 and 300' of the lower container 3, and the hooks 47 and 47' may be provided in the lower end portions 48 of the sidewall portions 43 and 44 in the intermediate areaA2. Thus, by hooks 47 and 47' being placed in the intermediate area A2 similarly to the sidewall highest portions 90, the hand reaches the sidewall highest portion 90 at the minimum distance after the upper container 4 is detached from the lower container 3, and thus the owner's work such as cleaning can be made easier.

The height of a rear-wall lowest portion 400 having the lowest height in the rear wall portion 42 may be 90% or less of the height of the sidewall highest portion 90. By such a configuration, the rear-wall lowest portion 400 can be made sufficiently lower than the sidewall highest portion 90, and the stress of the pet can be reduced by causing the pet to feel a feeling of spaciousness.

The height of each of the sidewall portions 43 and 44 may be 60% or more of the height of the sidewall highest portion 90 in an area of 80% or more in the front-rear direction. By such a configuration, in each of the sidewall portions 43 and 44, an area having a substantially equal height to the sidewall highest portion 90 can be sufficiently provided; thus, when the pet scratches toilet litter after excretion or on other occasions, the toilet litter can be appropriately bounced back by the sidewall portions 43 and 44.

When the rear wall portion 42 is divided into three equal parts in the width direction, and the central portion is referred to as a rear-wall central portion A10 and both end portions are referred to as rear-wall end portions A11 and A12, the height of the rear-wall central portion A10 may be lower than the heights of the rear-wall end portions A11 and A12, and a partial area of the rear-wall central portion A10 may be a rear-wall lowest portion 400 having the lowest height in the rear wall portion 42. By such a configuration, when the owner turns the upper container 4 upside down and holds end portion in the front-rear direction, the owner can stably hold the rear-wall central portion A10, which has a lower height than other areas and on which fingers can be easily hooked. Further, by lowering the height of the rear-wall central portion A10, which is likely to receive the line of sight of a pet excreting while directing the body to the rear wall portion 42, the stress of the pet can be reduced.

An upper end portion of the rear-wall lowest portion 400 may be located in a rearmost position in the front-rear direction among the upper end portions of the areas of the rear wall portion 42. By such a configuration, when the owner turns the upper container 4 upside down and holds end portions in the front-rear direction, the owner can stably hold a portion that has a low height and on which fingers can be easily hooked. Further, the pet is likely to naturally go to the deepest part having a low height; then, by lowering the height of a portion that is likely to receive the line of sight of a pet excreting while using the entire toilet and directing the body to the rear wall portion 42, the stress of the pet can be reduced.

In the rear wall portion 42, an area having a higher height may be more inclined frontward in the front-rear direction. By such a configuration, the line of sight of the pet escapes from an area having a low height; meanwhile, by the configuration in which an area having a relatively high height is inclined frontward, the pet excreting can make an action such as putting the face on the area having a high height; thus, the stress of the pet can be reduced more.

The upper container 4 may further have a sidewall extension portion 501 extending downward and inward in the width direction from an upper end portion of each of the sidewall portions 43 and 44, and the sidewall extension portion 501 may be provided at least in an upper end portion of the sidewall highest portion 90. When the owner holds the upper container 4 upside down, it is conceivable that urine splashes and dust attached to the insides of the sidewall portions 43 and 44, etc. may drop from an upper end portion of the upper container 4 to the floor. In this respect, by the configuration in which a sidewall extension portion 501 extending downward and inward in the width direction is provided in an upper end portion of the sidewall highest portion 90, urine splashes, etc. flowing from areas near the sidewall highest portions 90 in the sidewall portions 43 and 44 toward the floor can be received by the sidewall extension portions 501, and dropping of urine splashes, etc. to the floor can be appropriately suppressed.

The upper container 4 may further have a rear-wall extension portion 502 extending downward and forward in the front-rear direction from an upper end portion of the rear wall portion 42; the sidewall extension portion 501 may be provided in the entire area of each of the sidewall portions 43 and 44, the rear-wall extension portion 502 may be provided in the entire area of the rear wall portion 42, and the sidewall extension portion 501 and the rear-wall extension portion 502 may be provided continuously with each other. By such a configuration, urine splashes, etc. flowing from the entire areas of the sidewall portions 43 and 44 and the entire area of the rear wall portion 42 toward the floor can be received by the sidewall extension portions 501 or the rear-wall extension portion 502, and dropping of urine splashes, etc. to the floor can be appropriately suppressed.

The upper container 4 may further have: sidewall interception portions 501a to 501d provided on the sidewall extension portions 501 and extending between the sidewall extension portions 501 and the sidewall portions 43 and 44; and a rear-wall interception portion 502a provided on the rear-wall extension portion 502 and extending between the rear-wall extension portion 502 and the rear wall portion 42. By such a configuration, urine splashes, etc. received by the sidewall extension portions 501 and the rear-wall extension portion 502 can be accumulated in a predetermined area by the sidewall interception portions 501a to 501d and the rear-wall interception portion 502a, and dropping of urine splashes, etc. to the floor can be suppressed more appropriately.

The sidewall interception portions 501a to 501d and the rear-wall interception portion 502a may be provided at predetermined intervals on the sidewall extension portions 501 and the rear-wall extension portion 502 provided continuously with each other. By such a configuration, by adjusting the arrangement of a plurality of interception portions, an area where urine splashes, etc. are to be accumulated can be appropriately set, and dropping of urine splashes, etc. to the floor can be suppressed more appropriately.

Each of the sidewall portions 43 and 44 may be formed of a curved surface projecting downward and outward in the width direction from an upper end portion. By such a configuration, the fitting feeling can be improved to run along the palm, and the sidewall portions 43 and 44 can be easily gripped; thus, the upper container 4 can be held more stably. Further, by each of the sidewall portions 43 and 44 being designed to be a curved surface, when the owner holds the upper container 4 upside down, urine splashes and dust attached to the insides of the sidewall portions 43 and 44 flow along the curved surfaces; therefore, the time and the distance until urine splashes, etc. drop can be increased, and dropping of urine splashes, etc. to the floor can be appropriately suppressed.

Each of the sidewall portions 43 and 44 may have an inflection portion 49 on the lower end side. Thus, by an inflection portion 49 being provided on the lower end side, where fingers are to be located, the upper container 4 can be held more stably by placing fingers along the inflection portion 49.

### Reference Signs List

- 1: system toilet for a pet
- 2: excretion container
- 3: lower container
- 4: upper container
- 5: tray
- 21: bottom surface portion
- 40: opening portion
- 42: rear wall portion
- 43, 44: sidewall portion
- 47, 47': hook
- 49: inflection portion
- 90: sidewall highest portion
- 91: deepest portion
- 400: rear-wall lowest portion
- 401: rear-wall highest portion
- 501: sidewall extension portion
- 501a, 501b, 501c, 501d: sidewall interception portion
- 502: rear-wall extension portion
- 502a: rear-wall interception portion
- A1: entrance-side area
- A2: intermediate area
- A3: depth-side area
- A10: rear-wall central portion
- A11, A12: rear-wall end portion

## Claims

1. A system toilet for a pet, comprising:
an excretion container configured to store toilet litter and having a liquid-permeable bottom surface portion;
a tray placed below the excretion container and configured to store an absorbent sheet for absorbing liquid that has passed through the bottom surface portion;
a lower container configured to hold the tray; and
an upper container placed above the excretion container, an opening portion for a pet to enter and exit being formed in the upper container, an upper side of the upper container being opened,
wherein the upper container has:
a pair of sidewall portions provided to face each other on both sides in a width direction of the opening portion and extending in a front-rear direction that is a depth direction of the upper container; and a rear wall portion facing the opening portion in the front-rear direction, and
a height of a sidewall highest portion having a highest height in the sidewall portion is higher than a height of a rear-wall highest portion having a highest height in the rear wall portion.

2. The system toilet for a pet according to claim 1,
wherein when areas obtained by dividing the upper container into three equal parts in the front-rear direction are referred to as an entrance-side area, an intermediate area, and a depth-side area in this order from a front side,
the sidewall highest portion is formed in an area of the sidewall portion excluding a deepest portion of the depth-side area.

3. The system toilet for a pet according to claim 2, wherein the sidewall highest portion is formed in the sidewall portion in the intermediate area.

4. The system toilet for a pet according to claim 3, wherein a height of the sidewall portion in the entrance-side area and a height of the sidewall portion in the depth-side area are lower than a height of the sidewall portion in the intermediate area.

5. The system toilet for a pet according to claim 3 or 4,
wherein the upper container further has a hook provided in a lower end portion of the sidewall portion and configured to be coupled to a coupling portion of the lower container, and
the hook is provided in a lower end portion of the sidewall portion in the intermediate area.

6. The system toilet for a pet according to any one of claims 1 to 5, wherein a height of a rear-wall lowest portion having a lowest height in the rear wall portion is 90% or less of a height of the sidewall highest portion.

7. The system toilet for a pet according to any one of claims 1 to 6, wherein a height of the sidewall portion is 60% or more of a height of the sidewall highest portion in an area of 80% or more in the front-rear direction.

8. The system toilet for a pet according to any one of claims 1 to 7,
wherein when the rear wall portion is divided into three equal parts in the width direction, and a central portion is referred to as a rear-wall central portion and each of both end portions is referred to as a rear-wall end portion,
a height of the rear-wall central portion is lower than a height of the rear-wall end portion, and
a partial area of the rear-wall central portion is a rear-wall lowest portion having a lowest height in the rear wall portion.

9. The system toilet for a pet according to claim 8, wherein an upper end portion of the rear-wall lowest portion is located in a rearmost position in the front-rear direction among upper end portions of areas of the rear wall portion.

10. The system toilet for a pet according to claim 9, wherein in the rear wall portion, an area having a higher height is more inclined frontward in the front-rear direction.

11. The system toilet for a pet according to any one of claims 1 to 10,
wherein the upper container further has a sidewall extension portion extending downward and inward in the width direction from an upper end portion of the sidewall portion, and
the sidewall extension portion is provided at least in an upper end portion of the sidewall highest portion.

12. The system toilet for a pet according to claim 11,
wherein the upper container further has a rear-wall extension portion extending downward and forward in the front-rear direction from an upper end portion of the rear wall portion,
the sidewall extension portion is provided in an entire area of the sidewall portion,
the rear-wall extension portion is provided in an entire area of the rear wall, and
the sidewall extension portion and the rear-wall extension portion are provided continuously with each other.

13. The system toilet for a pet according to claim 12,
wherein the upper container further has:
a sidewall interception portion provided on the sidewall extension portion and extending between the sidewall extension portion and the sidewall portion; and
a rear-wall interception portion provided on the rear-wall extension portion and extending between the rear-wall extension portion and the rear wall portion.

14. The system toilet for a pet according to claim 13, wherein the sidewall interception portion and the rear-wall interception portion are provided at predetermined intervals on the sidewall extension portion and the rear-wall extension portion provided continuously with each other.

15. The system toilet for a pet according to any one of claims 1 to 14, wherein the sidewall portion is formed of a curved surface protruding downward and outward in the width direction from an upper end portion.

16. The system toilet for a pet according to claim 15, wherein the sidewall portion has an inflection portion on a lower end side.
